# EUROPÄISCHE PATENTSCHRIFT

(11) **EP 4 223 471 B1**
(45) Veröffentlichungstag und Bekanntmachung des Hinweises auf die Patenterteilung: **09.07.2025**
(21) Anmeldenummer: 23168108.1
(22) Anmeldetag: 09.08.2018
(51) Int. Cl.: B28B 1/00, B28B 3/20, E04G 21/04, B29C 64/106, B01F 27/1121, B01F 27/192, B01F 27/213, B01F 33/501, B01F 35/00

(54) **SYSTEM ZUM APPLIZIEREN EINES BAUSTOFFES**
SYSTEM FOR APPLYING A BUILDING MATERIAL
SYSTÈME D'APPLICATION D'UN MATÉRIAU DE CONSTRUCTION

(30) Priorität: 09.08.2017 EP 17185650
(43) Veröffentlichungstag der Anmeldung: 09.08.2023
(62) Teilanmeldung aus: 18749812.6
(73) Patentinhaber: Sika Technology AG, 6340 Baar (CH)
(72) Erfinder: KUHN, Patrik, 8046 Zürich (CH); BOURQUIN, Raphael, 8617 Mönchaltorf (CH); BRÜHWILER, Armin, 9606 Bütschwil (CH); LOOTENS, Didier, 6010 Kriens (CH)
(74) Vertreter: Sika Patent Attorneys

(56) Entgegenhaltungen:
- EP-A1- 1 836 992
- CN-A- 105 666 640
- CN-A- 106 903 776
- CN-A- 106 988 535
- DE-U1- 20 215 662

## Beschreibung

Die vorliegende Erfindung betrifft ein System zum Applizieren eines Baustoffes.

Zum automatisierten Applizieren von Baustoffen wurden bereits verschiedenartige Systeme vorgeschlagen. So offenbart beispielsweise die WO 2013/064826 A1 ein Verfahren sowie eine Vorrichtung zum Applizieren von zementösen Materialien. Dabei wird flüssiges zementöses Material über einen beweglichen Roboterarm an einen Bestimmungsort appliziert. Nachteilig an solchen und ähnlichen bekannten Systemen ist es, dass eine Reinigung von Komponenten, welche mit dem Baustoff in Berührung kommen, sich oftmals schwierig gestaltet. Dies ist insbesondere dann der Fall, wenn dem zementösen Baustoff ein Erstarrungsbeschleuniger oder Ähnliches beigemischt wird. Solche Systeme neigen zur Blockierung von Durchflussöffnungen, weil es vorkommen kann, dass das zunächst flüssige Baumaterial bereits im Applikationssystem erstarrt.

Das Dokument DE20215662U1 offenbart einen Mischer, der aus einer Mischtrommel, einem Elektromotor, einer innerhalb der Mischtrommel angeordneten Rührwelle, einem Rührarm, einer Schnecke, ein Einlass für flüssigen Beton, ein Einlass für Beschleuniger, ein Auslass für das gemischte Gemisch, ein Spüleinlass, ein Spülauslass, Schnellspannmechanismus und ein proximales und ein distales Rohrende besteht.

Eine Aufgabe der vorliegenden Erfindung besteht somit darin, ein System zum Applizieren eines Baustoffes zur Verfügung zu stellen, welches auf einfache Art und Weise unterhalten bzw. gereinigt werden kann, insbesondere an Komponenten, welche mit dem Baustoff in Berührung kommen.

Diese Aufgabe wird gelöst durch ein System zum Applizieren eines Baustoffes nach Anspruch 1.

Die vorgeschlagene Lösung hat zunächst den Vorteil, dass durch eine einfache Trennung von Antriebsmodul und Mischkammermodul das Mischkammermodul als Ganzes entnehmbar ist und dadurch ausgetauscht werden kann. Dies ist insbesondere dann von Vorteil, wenn in der Mischkammer eine Blockade des Baustoffes entsteht, und das System möglichst rasch wieder einsatzbereit sein soll, um weiterhin Baustoff zu applizieren. Mit dem hier vorgeschlagenen System kann in einem solchen Fall das Mischkammermodul als Ganzes abgetrennt werden und durch ein sauberes bzw. nicht blockiertes Mischkammermodul ersetzt werden. Dies gewährleistet eine möglichst rasche Überbrückung von Blockaden in der Mischkammer.

Das hier vorgeschlagene System bietet weiterhin den Vorteil, dass bei einer Abtrennung des Mischkammermoduls die rotierenden Bestandteile in der Mischkammer vom Antrieb getrennt sind, so dass für Reinigungs- und/oder Wartungsarbeiten an der Mischkammer eine Gefahr durch weiterhin rotierende Bauteile vermieden werden kann. Sobald das Mischkammermodul vom Antriebsmodul getrennt ist, kann eine Reinigungs- bzw. Wartungsarbeit am Mischkammermodul vorgenommen werden, ohne dass dabei Bestandteile des Mischkammermoduls weiterhin angetrieben würden.

Zudem bietet das hier vorgeschlagene System den Vorteil, dass das Mischkammermodul als Ganzes vom System getrennt werden kann und beispielsweise an einen dafür vorgesehenen Ort zur Reinigung des Mischkammermoduls bewegt werden kann, so dass das Mischkammermodul gereinigt bzw. instandgesetzt werden kann, und dann als Ganzes wieder dem System angeschlossen werden kann durch den Kupplungsmechanismus zwischen dem Antriebsmodul und dem Mischkammermodul. Ein weiterer Vorteil besteht darin, dass mit dem Mischkammermodul ein relativ leichter Bestandteil für Reinigungs- und/oder Unterhaltsarbeiten in dem System entnehmbar ist, wodurch schwerere Elemente, wie beispielsweise der Antrieb, im System verbleiben können.

In einer beispielhaften Ausführungsform ist der Mischer an einem Kopf der Bewegungsvorrichtung angeordnet, so dass sich der Mischer jeweils in einem Bereich des Applikationsortes befindet.

Eine solche Anordnung des Mischers im System bietet den Vorteil, dass die erste und die zweite Komponente erst kurz vor dem Verlassen des Baustoffes aus dem System gemischt werden. Dadurch kann beispielsweise ein Erstarrungsbeschleuniger als Bestandteil einer der Komponenten zugemischt werden, so dass eine Erstarrung des Baustoffes möglichst rasch nach dessen Austritt aus dem System erfolgen kann.

In einer beispielhaften Ausführungsform ist das Antriebsmodul an der Bewegungsvorrichtung angeordnet, wobei das Mischkammermodul in einem vom Antriebsmodul getrennten Zustand auch von der Bewegungsvorrichtung getrennt ist.

Durch eine solche Anordnung des Mischers am System entsteht der Vorteil, dass das Antriebsmodul im System verbleiben kann, wenn das Mischkammermodul vom Antriebsmodul getrennt wird. Dadurch können schwerere Komponenten, wie beispielsweise der Antrieb selber, im System verbleiben, währenddem leichtere Komponenten, wie das Mischkammermodul, dem System entnommen werden können, um Reinigungs- und/oder Wartungsarbeiten durchzuführen.

In einer beispielhaften Ausführungsform weist das erste Kupplungselement und das zweite Kupplungselement jeweils eine Verzahnung auf, wobei das Antriebsmodul und das Mischkammermodul im Applikationszustand mechanisch miteinander wirkverbunden sind.

In einem alternativen Ausführungsbeispiel sind das Antriebsmodul und das Mischkammermodul im Applikationszustand magnetisch oder anderweitig miteinander wirkverbunden. Beispielhafte weitere mögliche Ausgestaltungen der Kupplung umfassen Zahnkupplung, Lamellenkupplung, Bolzenkupplung, Klauenkupplung, Strömungskupplung, Rutschkupplung, Fliehkraftkupplung, Metallbalgkupplung, Flanschkupplung, Schleifkupplung, Federkupplung, Steckkupplung, Oldham-Kupplung, Periflex-Kupplung, Scheibenkupplung, Ringspann-Kupplung, Hülsenkupplung, oder Reibungskupplung.

Eine mechanische Wirkverbindung zwischen den Modulen bietet den Vorteil, dass dadurch ein robustes und kostengünstiges System realisiert werden kann.

Gemäß der Erfindung umfasst das Mischkammermodul ein Trommelmodul und ein Wellenmodul, welche voneinander trennbar ausgebildet sind. Das Vorsehen von trennbaren Untermodulen des Mischkammermoduls bietet den Vorteil, dass für eine Reinigung der Mischkammer das Mischkammermodul weiter auftrennbar ausgebildet ist, so dass die zu reinigenden und/oder zu wartenden Räume besser zugänglich sind. Zudem können dadurch einzelne Untermodule, wie beispielsweise das Wellenmodul, ausgetauscht werden, und andere Untermodule, wie beispielsweise das Trommelmodul, können für eine weitere Applikation des Baustoffes weiterverwendet werden. Es können beispielsweise auch verschiedene Wellenmodule für verschiedene Applikationszwecke verwendet werden. Durch den hier vorgeschlagenen modulartigen Aufbau lassen sich solche verschiedenartigen Wellenmodule auf einfache Art und Weise austauschen.

Gemäß der Erfindung umfasst das Trommelmodul eine Trommel mit zumindest einem Einlass und einem Auslass sowie einem distalen Verschluss.

In einer beispielhaften Ausführungsform ist die Trommel des Trommelmoduls einstückig ausgebildet und/oder röhrenförmig ausgebildet.

Das Vorsehen einer insbesondere röhrenförmigen einstückigen Trommel bietet den Vorteil, dass ein mechanisch robustes und sicheres System zur Verfügung gestellt werden kann. Zudem ist eine solch einstückig ausgebildete Trommel einfacher abzudichten, als dies Trommeln aus mehreren Bestandteilen sind. Zudem ist eine einstückig ausgebildete Trommel in der Tendenz leichter als Trommeln, welche aus mehreren Komponenten aufgebaut sind. Und weiterhin ermöglicht eine einstückig ausgebildete Trommel präzisere Lagerungen für eine Drehachse in Endbereichen der Trommel. Dies ist insbesondere von Bedeutung bei hohen Umdrehungszahlen.

In einer beispielhaften Ausführungsform umfassen der proximale und/oder der distale Verschluss auf einer zur Trommel hin gewandten Seite eine Opferplatte.

Das Vorsehen einer solchen Opferplatte hat den Vorteil, dass der durch die Trommel geförderte Baustoff die Opferplatte und nicht den Verschluss an sich beschädigt, so dass der proximale und/oder distale Verschluss über einen längeren Zeitraum verwendbar ist. Dabei kann in regelmässigen Abständen die Opferplatte ausgetauscht werden.

Gemäß der Erfindung umfasst die Trommel zumindest einen ersten Einlass und einen zweiten Einlass in einem ersten Endbereich der Trommel, wobei der Auslass in einem zweiten Endbereich der Trommel angeordnet ist.

In einer beispielhaften Weiterbildung umfass die Trommel weiterhin einen dritten Einlass.

In einer beispielhaften Weiterbildung umfass die Trommel weiterhin einen vierten Einlass.

In einer beispielhaften Weiterbildung umfass die Trommel weiterhin einen fünften Einlass.

Das Vorsehen von zwei oder mehreren Einlässen hat den Vorteil, dass einerseits die erste Komponente und die zweite Komponente direkt in der Trommel gemischt werden können, und/oder dass zur Spülung bzw. Reinigung der Trommel eine Reinigungsflüssigkeit durch einen separaten Einlass in die Trommel einbringbar ist. Weiterhin können zusätzliche Einlässe verwendet werden, um beispielsweise eine Farbkomponente oder Additive beizumischen.

Das Anordnen der Einlässe und des Auslasses an jeweils gegenüberliegenden Endbereichen der Trommel bietet den Vorteil, dass sowohl zur Mischung der Komponenten als auch zur Reinigung der Trommel das gesamte Trommelvolumen zur Verfügung steht.

Gemäß der Erfindung umfasst das Wellenmodul das zweite Kupplungselement, einen proximalen Verschluss und eine Rührwelle, wobei die Rührwelle mit dem zweiten Kupplungselement wirkverbunden ist.

Ein derart aufgebautes Wellenmodul hat den Vorteil, dass dadurch Komponenten und Räume des Mischers zur Reinigung bzw. Unterhalt des Mischers sehr gut zugänglich gemacht werden können, indem das Wellenmodul vom Trommelmodul getrennt wird. In einer beispielhaften Ausführungsform ist die Rührwelle auf einem ersten Abschnitt mit Stiften bestückt und/oder ist die Rührwelle mit Stiften bestückt.

In einer beispielhaften Weiterbildung sind die Stifte mit einem Aussengewinde ausgestattet, so dass die Stifte in entsprechende Löcher mit Innengewinden in der Rührwelle eingedreht werden können. Dies ermöglicht ein einfaches Austauschen bzw. Hinzufügen oder Wegnehmen von Stiften auf der Rührwelle. Weiterhin erlaubt eine solche Ausgestaltung der Stifte, eine Bestückungsmuster der Welle mit Stiften einfach anzupassen bzw. zu verändern.

In einer beispielhaften Ausführungsform hat die Rührwelle auf einem zweiten Abschnitt ein Förderelement, welches mit der Rührwelle und dadurch mit dem zweiten Kupplungselement wirkverbunden ist.

Das Vorsehen eines solchen Förderelementes auf der Rührwelle hat den Vorteil, dass dadurch das Baumaterial in der Mischkammer nicht nur durchmischt wird, sondern dass es zudem durch das Förderelement aus der Mischkammer gefördert werden kann. In einer beispielhaften Weiterbildung ist das Förderelement als Förderschnecke ausgebildet.

Es hat sich in Versuchen gezeigt, dass sich Förderschnecken besonders gut eignen, um das Baumaterial mit einem gewünschten Druck aus der Mischkammer zu fördern.

In einer weiteren beispielhaften Weiterbildung ist das Förderelement von der Rührwelle abziehbar ausgestaltet. Insbesondere ist dabei das Förderelement werkzeuglos von der Rührwelle abziehbar.

Dies hat den Vorteil, dass dadurch beispielsweise die Förderschnecke ausgetauscht werden kann, oder dass die einzelnen Elemente des Wellenmoduls besser zugänglich sind für Reinigungs- und/oder Unterhaltsarbeiten. Beispielsweise kann es notwendig sein, für verschiedene Baustoffe verschiedene Förderschnecken einzusetzen. Durch ein von der Rührwelle abziehbares Förderelement kann dadurch auf einfache Art und Weise ein Förderelement je nach Bedarf ausgetauscht werden.

In einer beispielhaften Weiterbildung ist das Förderelement durch ein Verriegelungselement auf der Rührwelle gesichert. Insbesondere ist dabei das Förderelement verdrehgesichert auf der Rührwelle angeordnet.

In einer alternativen Ausführungsform ist das Förderelement durch einen Bajonettverschluss oder Verschraubt oder Gepresst oder Geklemmt oder Verklebt oder Gesteckt oder Verriegelt oder mit Stiften und Bolzen auf der Rührwelle fixiert.

Gemäß der Erfindung umfasst das Antriebsmodul eine Stützeinrichtung, welche im Applikationszustand mit dem distalen Verschluss verbunden ist, wobei der distale Verschluss zumindest ein Lager für die Rührwelle hat. Dies bietet den Vorteil, dass die Rührwelle über zumindest je ein Lager im distalen Verschluss und zumindest je ein Lager im proximalen Verschluss am Antriebsmodul abgestützt werden kann. Insbesondere bei hohen Umdrehungsgeschwindigkeiten ist eine stabile und sichere Lagerung der Rührwelle von Bedeutung.

In einer beispielhaften Ausführungsform hat die Stützeinrichtung eine Vorrichtung, insbesondere ein Fixiermittel wie beispielsweise eine Schraube, um eine Positionierung des Antriebsmoduls relativ zum Mischkammermodul in Richtung der Rührwelle zu definieren.

Dies bietet den Vorteil, dass dadurch eine optimale und reproduzierbare Verbindung des ersten Kupplungselementes und des zweiten Kupplungselementes erreicht werden kann.

In einer beispielhaften Ausführungsform hat die Stützeinrichtung eine weitere Vorrichtung, insbesondere Fixiermittel wie beispielsweise Schrauben, um das Mischkammermodul am Antriebsmodul zu sichern.

Dies bietet den Vorteil, dass dadurch auch bei schnelleren Bewegungen der Bewegungsvorrichtung das Mischkammermodul mit dem Antriebsmodul exakt mitgeführt wird, und zudem weniger dazu neigt zu Schwingen.

In einer beispielhaften Ausführungsform umfasst die erste Komponente ein pumpbarer Beton und die zweite Komponente umfasst einen Erstarrungsbeschleuniger.

Dadurch werden der pumpbare Beton und der Erstarrungsbeschleuniger in der Mischkammer miteinander gemischt und sodann wird das Gemisch appliziert. Bei Versuchen hat sich gezeigt, dass eine möglichst gute Mischung von pumpbarem Beton und Erstarrungsbeschleuniger wichtig ist für das Erstarrungsverhalten des Baustoffes nach dessen Applikation. Zudem ist es vorteilhaft, wenn diese Komponenten möglichst kurz vor der Applikation des Baustoffes miteinander vermischt werden. Dadurch kann der Erstarrungsbeschleuniger höher dosiert werden, was eine raschere Erstarrung des Baustoffes nach dessen Applikation zur Folge hat. Dies wiederum erlaubt höhere Geschwindigkeiten bei einem Aufbau einer Struktur mit dem applizierten Baustoff.

In einer alternativen Ausführungsform handelt es sich beim Baustoff um eine mehrkomponentige Zusammensetzung auf Kunststoffbasis. Dabei umfasst die erste Komponente typischerweise ein reaktives Polymer oder Monomer und die zweite Komponente einen Härter oder Beschleuniger für die Vernetzung oder Aushärtung dieses Polymers oder Monomers. Beispielsweise handelt es dich bei derartigen Zusammensetzungen um Epoxidharze, Polyurethane, silanfunktionelle Polymere, Silicone, Acrylate und dergleichen.

In einer beispielhaften Ausführungsform ist die Bewegungsvorrichtung zur Veränderung eines Applikationsortes in einem Raum als Kran ausgebildet. Insbesondere ist dabei der Mischer an einem Kopf des Krans angeordnet.

In einer alternativen Ausführungsform ist die Bewegungsvorrichtung zur Veränderung eines Applikationsortes in einem Raum in der Form eines 3D-Druckers ausgebildet. Insbesondere ist dabei der Mischer an einem Druckkopf dieses 3D-Druckers angeordnet.

In einer beispielhaften Ausführungsform kann der Applikationsort im Raum durch die Bewegungsvorrichtung in einer Dimension oder in zwei Dimensionen oder in drei Dimensionen verändert werden.

Die Möglichkeit, den Applikationsort in möglichst vielen Dimensionen verändern zu können, bietet den Vorteil, dass dadurch komplexere Strukturen mit dem Baustoff hergestellt werden können. Insbesondere das Verwenden einer Bewegungsvorrichtung, welche in drei verschiedenen Dimensionen hinsichtlich des Applikationsortes bewegt werden kann, ist vorteilhaft, weil dadurch komplexe dreidimensionale Strukturen aus dem Baustoff hergestellt werden können.

Einzelheiten und Vorteile der Erfindung werden im Folgenden anhand von Ausführungsbeispielen und mit Bezug auf schematische Zeichnungen beschrieben. Es zeigen:
- Fig. 1: schematische Darstellung eines beispielhaften Systems zum Applizieren eines Baustoffes;
- Fig. 2: schematische Darstellung eines beispielhaften Mischers;
- Fig. 3a: schematische Darstellung eines beispielhaften Antriebsmoduls und Mischkammermoduls eines Mischers;
- Fig. 3b: schematische Darstellung eines beispielhaften Antriebsmoduls und Mischkammermoduls eines Mischers;
- Fig. 4a: schematische Darstellung eines beispielhaften Mischkammermoduls;
- Fig. 4b: schematische Darstellung eines beispielhaften Wellenmoduls und Trommelmoduls eines Mischkammermoduls;
- Fig. 5: schematische Darstellung eines beispielhaften Wellenmoduls;
und
- Fig. 6: schematische Darstellung eines beispielhaften Förderelementes.

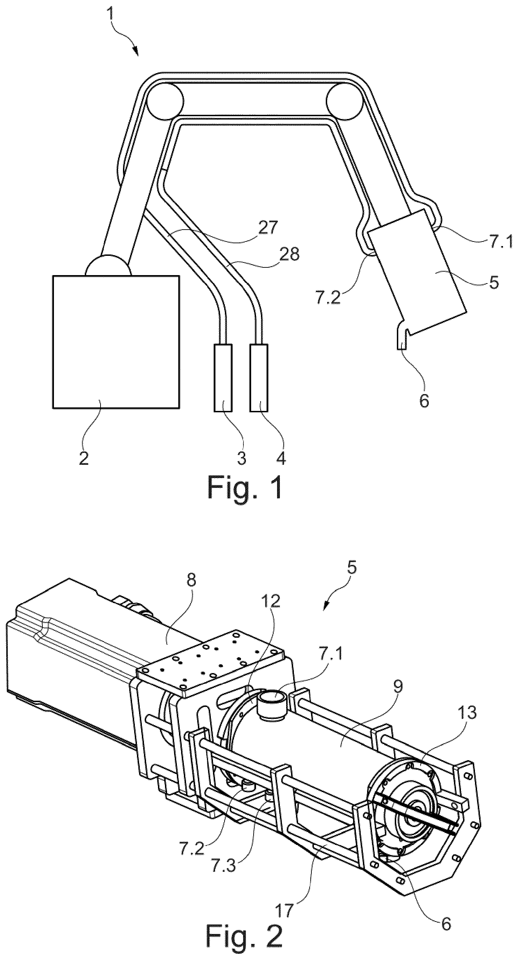

In Fig. 1 ist schematisch ein beispielhaftes System 1 zum Applizieren eines Baustoffes dargestellt. Das System 1 umfasst dabei eine Bewegungsvorrichtung 2 zur Veränderung eines Applikationsortes in einem Raum. In diesem Ausführungsbeispiel ist die Bewegungsvorrichtung 2 als kranartige Vorrichtung mit einem beweglichen Arm ausgebildet.

Das System 1 umfasst weiterhin eine erste Komponente 3 sowie eine zweite Komponente 4. In diesem Ausführungsbeispiel sind die erste Komponente 3 und die zweite Komponente 4 je in einem Behälter angeordnet, aus welchem die Komponenten jeweils über einen ersten Schlauch 27 und einen zweiten Schlauch 28 dem Mischer 5 zugeführt werden können. Zur Förderung der ersten Komponente 3 und der zweiten Komponente 4 werden beispielsweise Pumpen (nicht dargestellt) eingesetzt.

Die erste Komponente 3 wird dem Mischer 5 über einen ersten Einlass 7.1 zugeführt. Die zweite Komponente 4 wird dem Mischer 5 über einen zweiten Einlass 7.2 zugeführt. Dabei werden die erste Komponente 3 und die zweite Komponente 4 im Mischer 5 miteinander vermischt. Nach der Vermischung der Komponenten 3, 4 wird der Baustoff über einen Auslass 6 appliziert. Der Auslass 6 kann dabei direkt am Mischer 5 angeordnet sein. Weiterhin kann der Auslass 6 eine Düse umfassen (nicht dargestellt), um den Baustoff in einer gewünschten Form applizieren zu können.

Insbesondere wird als erste Komponente 3 ein pumpbarer Beton, das heisst ein flüssiger Beton, welcher durch ein Schlauchsystem gepumpt werden kann, verwendet, und als zweite Komponente 4 wird eine Flüssigkeit umfassend einen Erstarrungsbeschleuniger verwendet. Dadurch erstarrt der Baustoff nach dessen Applikation möglichst rasch, so dass eine Struktur aus dem Baustoff schichtweise aufgebaut werden kann. Je rascher der Baustoff nach dessen Applikation erstarrt, desto schneller kann die Struktur aufgebaut werden, und desto formstabiler bleibt die Struktur nach Applikation des Baustoffes.

Je nach Anwendungsbereich kann die Bewegungsvorrichtung 2 auch andersartig ausgestaltet sein, insbesondere in der Art eines 3D-Druckers.

In Fig. 2 ist schematisch ein beispielhafter Mischer 5 dargestellt. Der Mischer 5 umfasst einen Antrieb 8, eine Trommel 9, einen proximalen Verschluss 12, einen distalen Verschluss 13, einen Auslass 6, einen ersten Einlass 7.1, einen zweiten Einlass 7.2, einen dritten Einlass 7.3 und eine Stützeinrichtung 17. Dabei kann beispielsweise die erste Komponente 3 über den ersten Einlass 7.1 zugeführt werden, die zweite Komponente 4 über den dritten Einlass 7.3, wobei der zweite Einlass 7.2 für eine Reinigung der Trommel 9 mit einer Reinigungsflüssigkeit verwendet werden kann.

Der Baustoff kann beispielsweise direkt über den Auslass 6 appliziert werden, oder es kann eine Düse (nicht dargestellt) oder weitere Komponenten am Auslass 6 angebracht werden.

In diesem Ausführungsbeispiel ist der distale Verschluss 13 über die Stützeinrichtung 17 mit dem Antrieb 8 verbunden, so dass eine Rührwelle (nicht sichtbar in dieser Abbildung) sowohl im proximalen Verschluss 12 als auch im distalen Verschluss 13 gelagert werden kann.

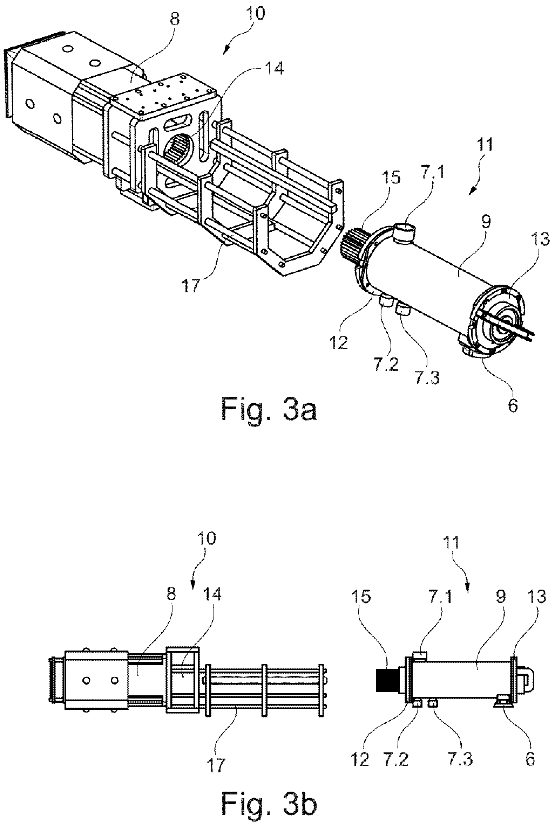

In den Fig. 3a und 3b ist jeweils der gleiche Mischer 5 wie in Fig. 2 dargestellt, jedoch sind in diesen Abbildungen das Antriebsmodul 10 und das Mischkammermodul 11 voneinander getrennt. Dabei ist ersichtlich, dass das Antriebsmodul 10 ein erstes Kupplungselement 14 umfasst, und das Mischkammermodul 11 ein zweites Kupplungselement 15 umfasst. In diesem Ausführungsbeispiel haben die Kupplungselemente 14, 15 jeweils eine Verzahnung, welche in einem Applikationszustand ineinandergreifen.

Durch die trennbare Anordnung von Mischkammermodul 11 und Antriebsmodul 10 kann insbesondere das Mischkammermodul 11 vom System 1 entfernt werden, um Reinigungs- und/oder Wartungsarbeiten am Mischkammermodul 11 auszuführen. Insbesondere kann dadurch die Trommel 9 auf einfache Art und Weise gereinigt werden, ohne dass dabei der gesamte Mischer 5 vom System 1 demontiert werden muss.

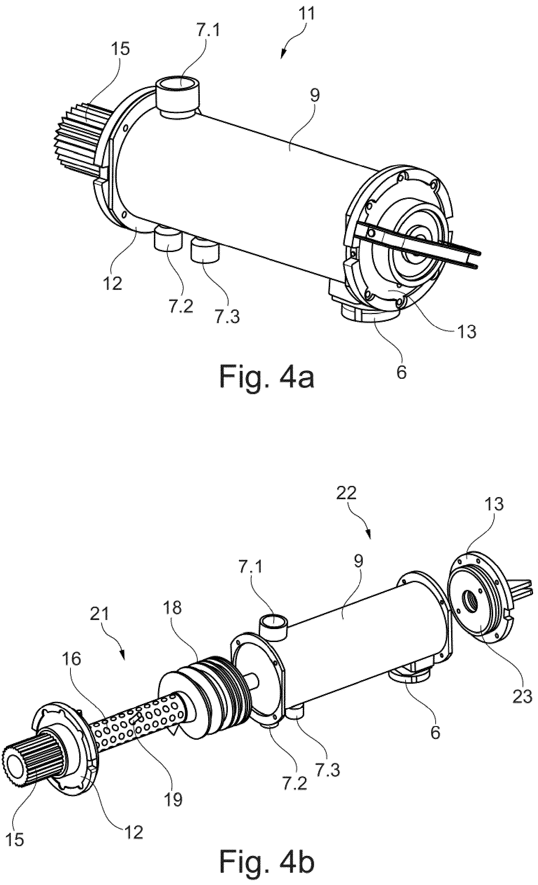

In den Fig. 4a und 4b ist jeweils das Mischkammermodul 11 ohne das Antriebsmodul 10 dargestellt. Dabei ist in Fig. 4a das Mischkammermodul 11 in einem zusammengesetzten Zustand abgebildet und in Fig. 4b ist das Mischkammermodul 11 in einem aufgetrennten Zustand abgebildet. In diesem Ausführungsbeispiel umfasst das Mischkammermodul 11 ein Wellenmodul 21 und ein Trommelmodul 22.

Das Wellenmodul 21 umfasst in diesem Ausführungsbeispiel das zweite Kupplungselement 15, den proximalen Verschluss 12, die Rührwelle 16 sowie ein Förderelement 18.

Das Trommelmodul 22 umfasst in diesem Ausführungsbeispiel eine einstückig ausgebildete röhrenförmige Trommel 9 sowie einen distalen Verschluss 13. Die Trommel 9 hat dabei einen ersten Einlass 7.1, einen zweiten Einlass 7.2 und einen dritten Einlass 7.3, welche alle in einem ersten Endbereich der Trommel 9 angeordnet sind. Der Auslass 6 ist dabei an einem zweiten Endbereich der Trommel 9 angeordnet.

Der distale Verschluss 13 hat in diesem Ausführungsbeispiel eine Opferplatte 23, welche auf einer Seite des distalen Verschlusses 13 angeordnet ist, welche der Trommel 9 zugewandt ist. Die Opferplatte 23 wird in einem Betrieb des Systems abgenutzt und kann bei Bedarf ausgewechselt werden. Dadurch kann der distale Verschluss 13 über einen längeren Zeitraum verwendet werden.

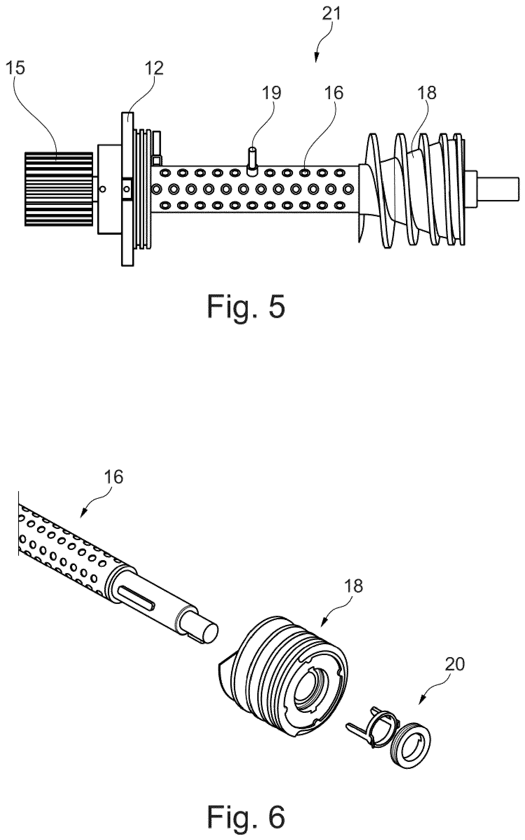

In Fig. 5 ist nun das Wellenmodul 21 ohne das Trommelmodul 22 abgebildet. Wiederum weist das Wellenmodul 21 das zweite Kupplungselement 15, den proximalen Verschluss 12, die Rührwelle 16 sowie das Förderelement 18 auf. Die Rührwelle 16 hat Stifte 19, welche in diesem Ausführungsbeispiel in die Rührwelle eingeschraubt sind. Zur besseren Übersichtlichkeit wurden lediglich zwei Stifte 19 dargestellt. Es versteht sich von selbst, dass für eine effiziente Vermischung der ersten Komponente und der zweiten Komponente mehrere Stifte 19 auf der Rührwelle 16 eingeschraubt werden können.

Das Förderelement 18 ist in diesem Ausführungsbeispiel als Förderschnecke ausgebildet.

In Fig. 6 ist ein beispielhaftes Förderelement 18 dargestellt, welches von der Rührwelle 16 abziehbar ausgestaltet ist. Um das Förderelement 18 mit der Rührwelle 16 in Wirkverbindung zu bringen, wird das Förderelement 18 auf vorgesehene Vorsprünge auf der Rührwelle 16 aufgesteckt und mit einem Verriegelungselement 20 auf der Rührwelle 16 gesichert. Ein solches abziehbares Förderelement 18 kann auf einfache Art und Weise ausgetauscht werden.

### Bezugszeichenliste

- 1: System
- 2: Bewegungsvorrichtung
- 3: erste Komponente
- 4: zweite Komponente
- 5: Mischer
- 6: Auslass
- 7: Einlass
- 7.1: erster Einlass
- 7.2: zweiter Einlass
- 7.3: dritter Einlass
- 8: Antrieb
- 9: Trommel
- 10: Antriebsmodul
- 11: Mischkammermodul
- 12: proximaler Verschluss
- 13: distaler Verschluss
- 14: erstes Kupplungselement
- 15: zweites Kupplungselement
- 16: Rührwelle
- 17: Stützeinrichtung
- 18: Förderelement
- 19: Stift
- 20: Verriegelungselement
- 21: Wellenmodul
- 22: Trommelmodul
- 23: Opferplatte
- 27: erster Schlauch
- 28: zweiter Schlauch

## Patentansprüche

1. System (1) zum Applizieren eines Baustoffes, das System (1) umfassend:
eine Bewegungsvorrichtung (2) zur Veränderung eines Applikationsortes in einem Raum;
eine erste Komponente (3) des Baustoffes;
eine zweite Komponente (4) des Baustoffes;
einen Mischer (5) zur Vermischung der ersten Komponente (3) und der zweiten Komponente (4);
wobei der Mischer (5) ein Antriebsmodul (10) mit einem ersten Kupplungselement (14) und ein Mischkammermodul (11) mit einem zweiten Kupplungselement (15) umfasst, wobei das Antriebsmodul (10) und das Mischkammermodul (11) durch die Kupplungselemente (14, 15) voneinander trennbar ausgebildet sind, und wobei das Antriebsmodul (10) und das Mischkammermodul (11) in einem Applikationszustand des Systems (1) durch die Kupplungselemente (14, 15) miteinander wirkverbunden sind und wobei das Mischkammermodul (11) ein Trommelmodul (22) und ein Wellenmodul (21) umfasst, welche voneinander trennbar ausgebildet sind und das Trommelmodul (22) eine Trommel (9) mit zumindest einem Einlass (7, 7.1, 7.2, 7.3) und einem Auslass (6) sowie einem distalen Verschluss (13) umfasst und die Trommel (9) zumindest einen ersten Einlass (7.1) und einen zweiten Einlass (7.2) in einem ersten Endbereich der Trommel (9) umfasst und wobei der Auslass (6) in einem zweiten Endbereich der Trommel (9) angeordnet ist und wobei das Wellenmodul (21) das zweite Kupplungselement (15), den proximalen Verschluss (12) und eine Rührwelle (16) umfasst, wobei die Rührwelle (16) mit dem zweiten Kupplungselement (15) wirkverbunden ist und wobei das Antriebsmodul (8) eine Stützeinrichtung (17) umfasst, welche im Applikationszustand mit dem distalen Verschluss (13) verbunden ist, und wobei der distale Verschluss (13) zumindest ein Lager für die Rührwelle (16) hat.

2. System (1) nach Anspruch 1, wobei der Mischer an einem Kopf der Bewegungsvorrichtung (2) angeordnet ist, so dass sich der Mischer (5) jeweils in einem Bereich des Applikationsortes befindet.

3. System (1) nach einem der vorhergehenden Ansprüche, wobei das Antriebsmodul (10) an der Bewegungsvorrichtung (2) angeordnet ist, wobei das Mischkammermodul (11) in einem vom Antriebsmodul (10) getrennten Zustand auch von der Bewegungsvorrichtung (2) getrennt ist.

4. System (1) nach einem der vorhergehenden Ansprüche, wobei das erste Kupplungselement (14) und das zweite Kupplungselement (15) jeweils eine Verzahnung aufweisen, wobei das Antriebsmodul (10) und das Mischkammermodul (11) im Applikationszustand mechanisch miteinander wirkverbunden sind.

5. System (1) nach einem der vorhergehenden Ansprüche, wobei die Trommel (9) des Trommelmoduls (22) einstückig ausgebildet ist und/oder wobei die Trommel (9) des Trommelmoduls (22) röhrenförmig ausgebildet ist.

6. System (1) nach einem der vorhergehenden Ansprüche, wobei ein proximaler Verschluss (12) und/oder der distale Verschluss (13) auf einer zur Trommel (9) hin gewandten Seite eine Opferplatte (23) umfasst.

7. System (1) nach einem der vorgehenden Ansprüche, wobei die Rührwelle (16) auf einem ersten Abschnitt mit Stiften (19) bestückt ist, und/oder wobei die Rührwelle (16) auf einem zweiten Abschnitt ein Förderelement (18) hat, welches mit der Rührwelle (16) und dadurch mit dem zweiten Kupplungselement (15) wirkverbunden ist.

8. System (1) nach Anspruch 7, wobei das Förderelement (18) als Förderschnecke ausgebildet ist und/oder wobei das Förderelement (18) von der Rührwelle (16) abziehbar ausgebildet ist.

9. System (1) nach einem der vorhergehenden Ansprüche, wobei die erste Komponente (3) einen pumpbaren Beton umfasst und wobei die zweite Komponente (4) einen Erstarrungsbeschleuniger umfasst.

## Claims

1. System (1) for applying a building material, the system (1) comprising:
a movement apparatus (2) for changing an application site in a space;
a first component (3) of the building material;
a second component (4) of the building material;
a mixer (5) for mixing the first component (3) and the second component (4);
wherein the mixer (5) comprises a drive module (10), which has a first coupling element (14), and a mixing chamber module (11), which has a second coupling element (15), wherein the drive module (10) and the mixing chamber module (11) are designed as separable from one another by way of the coupling elements (14, 15), and wherein the drive module (10) and the mixing chamber module (11), in an application state of the system (1), are operatively interconnected by the coupling elements (14, 15) and wherein the mixing chamber module (11) comprises a drum module (22) and a shaft module (21), which are designed as separable from one another and the drum module (22) comprises a drum (9), which has at least one inlet (7, 7.1, 7.2, 7.3) and an outlet (6), and a distal closure (13) and the drum (9) comprises at least a first inlet (7.1) and a second inlet (7.2) in a first end region of the drum (9) and wherein the outlet (6) is located in a second end region of the drum (9) and wherein the shaft module (21) comprises the second coupling element (15), the proximal closure (12) and a stirring shaft (16), wherein the stirring shaft (16) is operatively connected to the second coupling element (15) and wherein the drive module (8) comprises a support device (17), which in the application state is connected to the distal closure (13), and wherein the distal closure (13) has at least one bearing for the stirring shaft (16).

2. System (1) according to Claim 1, wherein the mixer is located on a head of the movement apparatus (2), so that the mixer (5) is respectively located in a region of the application site.

3. System (1) according to either of the preceding claims, wherein the drive module (10) is located on the movement apparatus (2), wherein the mixing chamber module (11), when it has been separated from the drive module (10), is also separated from the movement apparatus (2).

4. System (1) according to one of the preceding claims, wherein the first coupling element (14) and the second coupling element (15) each have a toothing, wherein the drive module (10) and the mixing chamber module (11) in the application state are mechanically operatively interconnected.

5. System (1) according to one of the preceding claims, wherein the drum (9) of the drum module (22) is formed in one piece and/or wherein the drum (9) of the drum module (22) has a tubular design.

6. System (1) according to one of the preceding claims, wherein a proximal closure (12) and/or the distal closure (13) comprises a sacrificial plate (23) on a side facing towards the drum (9).

7. System (1) according to one of the preceding claims, wherein the stirring shaft (16) is equipped with pins (19) on a first portion, and/or wherein the stirring shaft (16), on a second portion, has a conveying element (18) which is operatively connected to the stirring shaft (16) and thus to the second coupling element (15).

8. System (1) according to Claim 7, wherein the conveying element (18) is in the form of a screw conveyor and/or wherein the conveying element (18) is designed such that it can be pulled off of the stirring shaft (16).

9. System (1) according to one of the preceding claims, wherein the first component (3) comprises a pumpable concrete and wherein the second component (4) comprises a hardening accelerator.

## Revendications

1. Système (1) pour appliquer un matériau de construction, le système (1) comprenant :
un dispositif de déplacement (2) pour modifier un lieu d'application dans une pièce ;
un premier composant (3) du matériau de construction ;
un deuxième composant (4) du matériau de construction ;
un mélangeur (5) pour mélanger le premier composant (3) et le deuxième composant (4) ;
le mélangeur (5) comprenant un module d'entraînement (10) doté d'un premier élément d'accouplement (14) et un module de chambre de mélange (11) doté d'un deuxième élément d'accouplement (15), le module d'entraînement (10) et le module de chambre de mélange (11) étant conçus de manière à pouvoir être séparés l'un de l'autre par les éléments d'accouplement (14, 15), et le module d'entraînement (10) et le module de chambre de mélange (11) étant reliés de manière active l'un à l'autre par les éléments d'accouplement (14, 15) dans un état d'application du système (1), et le module de chambre de mélange (11) comprenant un module tambour (22) et un module arbre (21), qui sont séparables l'un de l'autre, et le module tambour (22) comprenant un tambour (9) ayant au moins une entrée (7, 7.1, 7.2, 7.3) et une sortie (6) ainsi qu'une fermeture distale (13), et le tambour (9) comprenant au moins une première entrée (7.1) et une deuxième entrée (7.2) dans une première zone d'extrémité du tambour (9), et la sortie (6) étant agencée dans une deuxième zone d'extrémité du tambour (9), et le module arbre (21) comprenant le deuxième élément d'accouplement (15), la fermeture proximale (12) et un arbre d'agitation (16), l'arbre d'agitation (16) étant en liaison active avec le deuxième élément d'accouplement (15), et le module d'entraînement (8) comprenant un dispositif de support (17) qui est relié à la fermeture distale (13) à l'état d'application, et la fermeture distale (13) comportant au moins un palier pour l'arbre d'agitation (16).

2. Système (1) selon la revendication 1, dans lequel le mélangeur est agencé sur une tête du dispositif de déplacement (2) de telle sorte que le mélangeur (5) se trouve dans chaque cas dans une zone du site d'application.

3. Système (1) selon l'une des revendications précédentes, dans lequel le module d'entraînement (10) est agencé sur le dispositif de déplacement (2), le module de chambre de mélange (11) étant également séparé du dispositif de déplacement (2) dans un état de séparation d'avec le module d'entraînement (10).

4. Système (1) selon l'une des revendications précédentes, dans lequel le premier élément d'accouplement (14) et le deuxième élément d'accouplement (15) présentent chacun une denture, le module d'entraînement (10) et le module de chambre de mélange (11) étant reliés mécaniquement l'un à l'autre dans l'état d'application.

5. Système (1) selon l'une des revendications précédentes, dans lequel le tambour (9) du module tambour (22) est réalisé en une seule pièce et/ou dans lequel le tambour (9) du module tambour (22) est réalisé sous forme tubulaire.

6. Système (1) selon l'une des revendications précédentes, dans lequel une fermeture proximale (12) et/ou la fermeture distale (13) comprend une plaque sacrificielle (23) sur un côté tourné vers le tambour (9).

7. Système (1) selon l'une des revendications précédentes, dans lequel l'arbre d'agitation (16) est équipé de broches (19) sur une première partie, et/ou dans lequel l'arbre d'agitation (16) comporte sur une deuxième partie un élément de transport (18) qui est en liaison active avec l'arbre d'agitation (16) et donc avec le deuxième élément d'accouplement (15).

8. Système (1) selon la revendication 7, dans lequel l'élément de transport (18) est conçu sous la forme d'une vis sans fin et/ou dans lequel l'élément de transport (18) est conçu de manière à pouvoir être retiré de l'arbre d'agitation (16).

9. Système (1) selon l'une des revendications précédentes, dans lequel le premier composant (3) comprend un béton pompable et le deuxième composant (4) comprend un accélérateur de prise.
